# EUROPÄISCHE PATENTSCHRIFT

(11) **EP 0 503 464 B1**
(45) Veröffentlichungstag und Bekanntmachung des Hinweises auf die Patenterteilung: **16.04.1997**
(21) Anmeldenummer: 92103719.8
(22) Anmeldetag: 05.03.1992
(51) Int. Cl.: H04Q 11/00, H04L 12/56

(54) **Optische Vermittlungseinrichtung und Schaltmodul dafür**
Optical switching apparatus and switching module for the same
Dispositif de commutation optique et module de commutation pour ce dispositif

(30) Priorität: 14.03.1991 DE 4108213
(43) Veröffentlichungstag der Anmeldung: 16.09.1992
(73) Patentinhaber: Alcatel SEL Aktiengesellschaft, D-70435 Stuttgart (DE)
(72) Erfinder: Böttle, Dietrich, W-7335 Salach (DE); Eilenberger, Gert, Dr., W-7312 Kirchheim (DE)
(74) Vertreter: Brose, Gerhard, Dipl.-Ing.

(56) Entgegenhaltungen:
- EP-A- 0 310 058
- PATENT ABSTRACTS OF JAPAN vol. 7, no. 284 (E-217)(1429) 17. Dezember 1983 & JP-A-58 161 489

## Beschreibung

Die Erfindung betrifft eine Optische Vermittlungseinrichtung nach dem Oberbegriff des Anspruchs 1 und ein Schaltmodul dafür.

Eines der Probleme bei der optischen Vermittlungstechnik ist die Zwischenspeicherung von Signalen. Zur Vermittlung von im Zeitmultiplex zusammengefaßten Signalen müssen bei der Vermittlung beinahe immer die Zeitlagen gewechselt und damit die Signale zwischengespeichert werden. Bei Paketvermittlungseinrichtungen, die im Hinblick auf zukünftige ATM-Systeme (ATM = Asynchronous Transfer Mode) derzeit von besonderem Interesse sind, muß immer dann zwischengespeichert werden, wenn zwei Pakete, bei ATM Zellen genannt, gleichzeitig zur Weitergabe in einem bestimmten Kanal bereitstehen. Wegen des statistischen Verkehrsaufkommens kann nicht ausgeschlossen werden, daß zwei Pakete gleichzeitig auf dem gleichen Weg weitergegeben werden sollten.

Aus J.S. Turner, "Design of a Broadcast Packet Network", veröffentlicht in "Proceedings of INFOCOM '86", April 1986, Seiten 667 bis 675 ist es bereits bekannt, innerhalb eines ATM-Koppelnetzes jeweils mehrere Leitungen zu einer Gruppe zusammenzufassen. Die Leitungen einer Gruppe laufen jeweils parallel und sind untereinander völlig gleichwertig. Außer der Tatsache, daß hier die Kapazität erhöht wird, ist dabei von Bedeutung, daß die statistischen Verkehrsschwankungen ausgeglichen werden, was die Zahl der notwendigen Zwischenspeicher erniedrigt.

Aus der DE 37 42 941 C2 (entspricht US 4,922,487, internes Aktenzeichen G. Eilenberger 1-3-1) ist eine ATM-Vermittlungsstelle bekannt, bei der jeweils eine feste Zahl zu vermittelnder Zellen oder Pakete zu einem Rahmen zusammengefaßt, sämtliche Pakete in untereinander gleich lange Paketteile zerlegt und auf Unterrahmen aufgeteilt werden. Vermittelt wird auf der Basis von Unterrahmen im synchronen Zeitmuliplex. Ausgenützt wird dabei die Tatsache, daß alle Zeitkanäle auf einer Leitung untereinander gleichwertige Abnehmerkanäle darstellen, womit statistische Schwankungen weitgehend ausgeglichen werden. Als Speicher wirken die bei synchroner Zeitmultiplexvermittlung ohnehin erforderlichen Speicher. Der Speicherplatzbedarf im Koppelfeld wird im Verhältnis Rahmen : Unterrahmen verringert.

Aus D.W. Smith et al, "Multidimensional Optical Switching Networks", IEEE 1989, ist bekannt, zum Zwecke der Kapazitätserhöhung einer optischen Vermittlungsstelle die bekannten Multiplexmethoden, bei denen zum Zeit- und Raummultiplex in der optischen Vermittlungstechnik auch der Wellenlängen- oder Frequenzmultiplex gehört, miteinander zu kombinieren. Die Hinzunahme des Wellenlängen- oder Frequenzmultiplex als weiterer Dimension erhöht nicht nur, wie dort gewünscht, die Kapazität der Anlage, sondern erhöht im selben Maße auch die Anzahl der jeweils untereinander gleichwertigen Abnehmerkanäle. Der Gesamtkapazität dieser Vermittlungsstelle sind aber doch recht enge Grenzen gesetzt.

Bei ausreichender Anzahl untereinander gleichwertiger Abnehmerkanäle werden die auftretenden statistischen Schwankungen soweit ausgeglichen, daß auf Zwischenspeicher, mit Ausnahme der für die Umsetzung der Zeitlagen beim Zeitmultiplex erforderlichen, verzichtet werden kann. Dabei ist berücksichtigt, daß auch in denjenigen Fällen, in denen Zwischenspeicher eingesetzt werden, dem Ausgleich statistischer Schwankungen Grenzen gesetzt sind.

Der Erfindung liegt die Aufgabe zugrunde, eine optische Vermittlungseinrichtung anzugeben, bei der sämtliche Multiplexarten (Raum, Zeit, Wellenlänge) kombinierbar sind, und deren Gesamtkapazität praktisch beliebig erhöht werden kann.

Diese Aufgabe wird gelöst durch eine optische Vermittlungseinrichtung nach der Lehre des Hauptanspruchs. Vorteilhafte Ausgestaltungen sind den Unteransprüchen zu entnehmen. Anspruch 6 nennt ein vorteilhaft gestaltetes Schaltmodul für eine solche optische Vermittlungseinrichtung.

Der Erfindung liegt die Erkenntnis zugrunde, daß bei mehrstufigen Koppelnetzanordnungen, die für größere Anlagen zwingend sind, die Reihenfolge der Aufeinanderfolge der verschiedenartigen (Raum, Zeit, Wellenlänge) Umsetzeinrichtungen von großer Bedeutung ist. Ein unmittelbares Aufeinanderfolgen von Raumstufen ist zwecklos (sofern sie nicht funktionell mit Einrichtungen zur Umsetzung der Zeitlagen oder Wellenlängen verbunden sind) und deshalb zu vermeiden. Auch ein unmittelbares Aufeinanderfolgen von Einrichtungen zur Umsetzung der Zeitlagen und der Wellenlängen sollte vermieden werden. Ein modularer Aufbau mit untereinander gleichen Modulen ist anzustreben.

Im folgenden wird die Erfindung anhand eines Ausführungsbeispiels unter Zuhilfenahme der beiliegenden Zeichnungen weiter erläutert:
- Fig. 1: zeigt eine erfindungsgemäße optische Vermittlungseinrichtung mit mehreren Schaltmodulen, von denen eines in erfindungsgemäßer Weise detailliert dargestellt ist.
- Fig. 2: zeigt beispielhaft ein Vermittlungselement, in dem Einrichtungen zur Umsetzung der Wellenlängen funktionell mit einer Raumkoppelstufe verbunden sind.

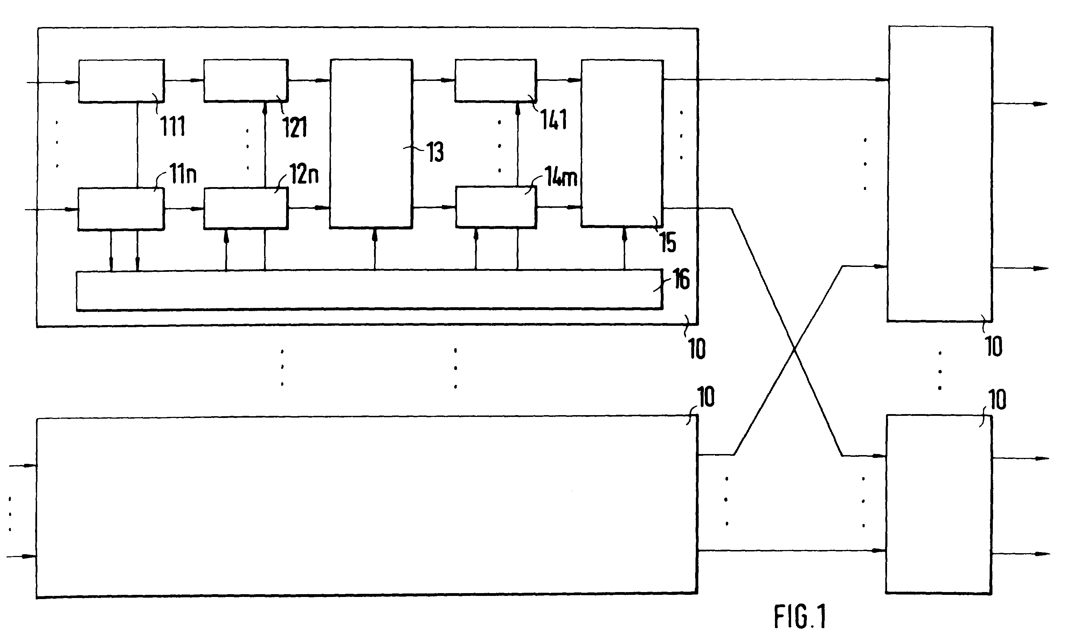

Die in Fig. 1 dargestellte optische Vermittlungseinrichtung weist mehrere Schaltmodule 10 auf, die in zwei aufeinanderfolgenden Stufen angeordnet sind. In jeder Stufe sind zwei Schaltmodule 10 dargestellt, weitere sind durch Punkte angedeutet. Die Schaltmodule 10 sind untereinander in derselben Weise verbunden, wie dies von elektrischen Vermittlungseinrichtungen bekannt ist. Im Prinzip kann jede von dort bekannte Struktur, auch mit mehreren Stufen, hier verwendet werden. Das gleiche gilt für die Einbindung dieser Vermittlungseinrichtungen zwischen peripheren Einrichtungen, für Taktversorgung, Stromversorgung und Steuerung.

Bei einem der dargestellten Schaltmodule 10 ist auch der innere Aufbau dargestellt. Jede optische Eingangsleitung endet an einer Eingangsschaltung 111, ..., 11n. Diese Eingangsschaltungen haben einerseits die Aufgabe, die ankommenden Daten zu synchronisieren, andererseits im Datenstrom enthaltene, für dieses Schaltmodul bestimmte Steuerinformationen auszukoppeln.

Da auf jeder Eingangsleitung gleichzeitig mehrere Signale verschiedener Wellenlängen auftreten, müssen auch all diese Signale synchronisiert werden. Es kann davon ausgegangen werden, daß alle auf derselben Eingangsleitung ankommenden Signale beim Verlassen der diesem Schaltmodul vorangehenden Einheit zueinander synchron waren. Sofern die Dispersion der Leitungen, also die Abhängigkeit der Ausbreitungsgeschwindigkeit von der Wellenlänge, gering ist, genügt es, alle Signale einer Eingangsleitung gemeinsam zu synchronisieren, falls dies die Art der Synchronisiermittel erlaubt. Abgesehen von den Mitteln zum Festlegen des richtigen Takts sind hier im wesentlichen Kurzzeitspeicher erforderlich. Als solche kommen bistabile Elemente oder schaltbare Laufzeitglieder in Frage.

Bei Verwendung bistabiler Elemente müssen auf jeden Fall die verschiedenen Signale mit verschiedenen Wellenlängen voneinander getrennt werden und einzeln synchronisiert werden. Da in den nachfolgenden Einrichtungen ohnehin jedes Signal, z.B. jede ATM-Zelle, unabhängig von allen anderen zu vermitteln ist, muß diese Auftrennung ohnehin erfolgen.

Unter Verwendung optisch-elektrischer und elektrisch-optischer Umsetzer können bekannte elektrische bistabile Elemente verwendet werden.

Aus H.S. Hinton, "Architectural Considerations for Photonic Switching Networks", IEEE Journal on Selected Areas in Communications, Vol 6, No. 7, August 1988, Seiten 1209 bis 1225, sind auch bistabile optische Elemente bekannt.

Schaltbare optische Laufzeitglieder für optische Zeitlagenwähler sind bekannt aus DE-OS 35 11 072. Diese können, bei anderer Wahl der Laufzeiten, auch zur Synchronisation verwendet werden.

Die Auskopplung der Steuerinformationen kann sowohl optisch als auch elektrisch erfolgen. Als Steuerinformationen kommen sowohl für das betreffende Schaltmodul bestimmte Steuerzellen als auch in den Zellen enthaltene Adressinformationen in Frage. Es ist auch möglich, eine Wellenlänge für Steuerinformationen zu reservieren, die dann sowohl aus sämtlichen Adressinformationen für die auf den übrigen Wellenlängen ankommenden Zellen als auch aus sonstigen für das Schaltmodul bestimmten Steuerinformationen besteht.

Den Eingangsschaltungen 111, ..., 11n folgt jeweils eine Zeitstufe (Zeitlagen-Wechsler) 121, ..., 12n. Hier bietet sich, vor allem bei ATM, wo immer für eine ganze Zelle einheitlicher Länge die Zeitlage gewechselt werden muß, ganz besonders die Realisierung durch Laufzeitglieder an, wie sie aus der oben genannten DE-OS 35 11 072 bekannt sind. Besonders vorteilhaft, wenn auch nicht zwingend, ist es, wenn die vorhandenen Laufzeitglieder jeder einzelnen Wellenlänge wahlweise zugeordnet werden können. Dies hat dann zur Folge, daß die für ATM typischen statistischen Schwankungen innerhalb einer Zeitstufe etwas ausgeglichen werden, wodurch weniger als Speicherelemente dienende Laufzeitglieder benötigt werden. Ansonsten müßte pro Wellenlänge eine bestimmte Zahl von Laufzeitgliedern vorgesehen werden.

Den Zeitstufen 121, ..., 12n folgt eine Raumstufe 13. Die Raumstufe weist pro vorangegangene Zeitstufe und pro verwendeter Wellenlänge einen Eingang und ebensoviele Ausgänge auf. Jeder Eingang muß mit jedem Ausgang verbindbar sein, ohne die Verbindung zwischen einem anderen Eingang und einem anderen Ausgang zu blockieren. Die Raumstufe muß, trotz der hier verwendeten Bezeichnung, nicht zwingend einstufig sein. Auch mehrstufige Raumkoppelanordnungen sind zulässig (und während einer bestimmten Übergangszeit auch erforderlich). Solche Raumkoppelanordnungen sind allgemein bekannt; die Strukturen sind gleich wie bei elektrischen Raumkoppelanordnungen und die einzelnen Koppelelemente (z.B. optische Streifenwellenleiterkreuzungen) sind ebenfalls längst Stand der Technik. Aber auch größere einstufige Anordnungen sind bereits bekannt, beispielsweise aus dem bereits erwähnten Artikel von H.S. Hinton.

Der Raumstufe 13 folgen Wellenlängenumsetzer 141, ..., 14m. Die Zahl der erforderlichen Wellenlängenumsetzer ist gleich der Zahl der Eingangsleitungen multipliziert mit der Zahl der vorgesehenen Wellenlängen. Wellenlängenumsetzer können im einfachsten Fall durch Aufeinanderfolge von Photodiode und Laserdiode gebildet werden. Es kann sowohl eine abstimmbare Laserdiode als auch eine entsprechende Anzahl von Laserdioden mit unterschiedlichen Wellenlängen verwendet werden, wobei dann entweder abgestimmt oder umgeschaltet werden muß. Es sind aber auch bereits rein optisch arbeitende

Wellenlängenumsetzer bekannt, beispielsweise aus H. Kawaguchi et al., "Tunable Optical-Wavelength Conversion Using an Optically Triggerable Multielectrode Distributed Feedback Laser Diode", IEEE Journal of Quantum Electronics, Vol. 24, No. 11, November 1988, Seiten 2153 bis 2159.

Den Wellenlängenumsetzern 141, ..., 14m folgt wieder eine Raumstufe 15, die der Raumstufe 13 gleichen kann.

Das Schaltmodul 10 weist ferner eine Steuerschaltung 16 auf. Außer verschiedenen Kontrollfunktionen, die hier nicht berücksichtigt sind, hat diese Steuerschaltung die Aufgabe, für jede einzelne in einer der Eingangsschaltungen ankommende Zelle die in den nachfolgenden Stufen erforderlichen Umsetzungen in Zeit, Raum und Wellenlänge zu veranlassen. Dazu werden, wie oben beschrieben, in den einzelnen Eingangsschaltungen 111, ..., 11n die Steuerinformationen ausgekoppelt und der Steuerschaltung 16 zugeführt. Diese wiederum gibt daraus abgeleitete Steuerinformationen an die Zeitstufen 121, ..., 12n, an die Wellenlängenumsetzer 141, ..., 14m und an die Raumstufe 13 und 15.

Die in den Zellen enthaltene Adressinformation kann entweder direkt mit Hilfe eines Algorithmus in die erforderlichen Steuerinformationen umgesetzt werden (selfrouting) oder mit Hilfe von Informationen, die in Verbindungstabellen abgespeichert sind (label routing), wobei dann die Verbindungstabellen durch weitere Steuerinformationen aktuallisiert werden können, die ebenfalls über die Eingangsleitungen, aber auch auf andere Weise, die Steuerschaltung 16 erreichen.

Wie schon erwähnt, können die Steuersignale sowohl in optischer als auch elektrischer Form aus den Eingangsleitungen ausgekoppelt werden. Die Steuerschaltung 16 wird aber als elektrische Schaltung ausgeführt werden, wenngleich zu erwarten ist, daß auch hierfür in Zukunft optische Schaltungen möglich sein werden.

In allen Umsetzerstufen müssen die Signale in ihre einzelnen Wellenlängen zerlegt werden. Wellenlängenmultiplexer und -demultiplexer sind allgemein bekannt. Innerhalb der Umsetzerstufen wird der Wellenlängenmultiplex eigentlich als weitere Raumdimension verwendet. Aus verschiedenen Gründen macht es aber durchaus Sinn, zwischen den einzelnen Stufen eine Raumdimension durch den Wellenlängenmultiplex zu ersetzen:
- Kritisch hinsichtlich der Laufzeiten und damit der Synchronisation sind weniger die Verhältnisse innerhalb der Umsetzerstufen als vielmehr die Verhältnisse dazwischen, insbesondere die Leitungen zwischen den Schaltmodulen.
- Bei einer zu erwartenden integrierten Bauweise auch für optische Schaltungen ist es, mehr noch als bei elektrischen Schaltungen, wesentlich problemloser, weitere Schaltungselemente mit zu integrieren, als zusätzliche Anschlüsse und Verbindungsleitungen vorzusehen. Wellenlängenmultiplexer und -demultiplexer sind weniger aufwendig als zusätzliche Verbindungsleitungen.

Es ist vorteilhaft, wenn die gesamte optische Vermittlungseinrichtung, wie im Beispiel nach Fig. 1, aus untereinander gleichen Schaltmodulen besteht, die in mindestens zwei aufeinander folgenden Stufen angeordnet sind. Jedes dieser Module muß dann Zeitstufen, Wellenlängenumsetzer und mindestens eine Raumstufe aufweisen.

Ein unmittelbares Aufeinanderfolgen zweier Raumkoppelstufen, bei denen jeweils von jedem Eingang aus jeder Aufgang erreichbar ist, soll vermieden werden. In jede Verbindungsleitung zwischen zwei solchen Raumkoppelstufen soll immer entweder jeweils eine Zeitstufe oder ein Wellenlängenumsetzer eingefügt werden.

Selbstverständlich sind auch zwei unmittelbar aufeinanderfolgende Zeitstufen oder zwei aufeinanderfolgende Wellenlängenumsetzer zu vermeiden. Es sollte aber auch vermieden werden, daß eine Zeitstufe und ein Wellenlängenumsetzer unmittelbar aufeinanderfolgen. Vielmehr sollten Zeitstufen und Wellenlängenumsetzer immer durch eine Raumstufe von einander getrennt sein.

Eine solche optische Vermittlungseinrichtung besteht also bevorzugt aus untereinander gleich aufgebauten Schaltmodulen, die jeweils Zeitstufen, Wellenlängenumsetzer und mindestens eine Raumkoppelstufe aufweisen und die in mindestens zwei aufeinanderfolgenden Stufen angeordnet sind.

Besonders bevorzugt werden solche Schaltmodule, die jeweils zwei Raumkoppelstufen aufweisen. Es folgt dann eine Kombination aus Wellenlängen- und Raumumsetzung und eine Kombination aus Zeit- und Raumumsetzung aufeinander, wobei die Reihenfolge unerheblich ist. Auch innerhalb der beiden Kombinationen ist es unerheblich, welche der beiden Funktionen zuerst kommt. Beide Raumumsetzungen dürfen aber nicht direkt aufeinanderfolgen. Auch sollen Wellenlängen- und Zeitumsetzung nicht direkt aufeinanderfolgen.

Die beiden Raumstufen können auch funktionell mit einerseits den Zeitstufen und andererseits den Wellenlängenumsetzern eine Einheit bilden.

Sind, wie oben erwähnt, die Zeitstufen aus Laufzeitgliedern gebildet, die jeweils allen Leitungen gemeinsam sind, so muß durch Schaltelemente sichergestellt sein, daß jedes Laufzeitglied wahlweise von jedem Eingang aus erreicht werden kann und auch wieder wahlweise auf jeden Ausgang ausgeben kann. Dabei ist dann bereits die Funktion der Raumstufe mit enthalten.

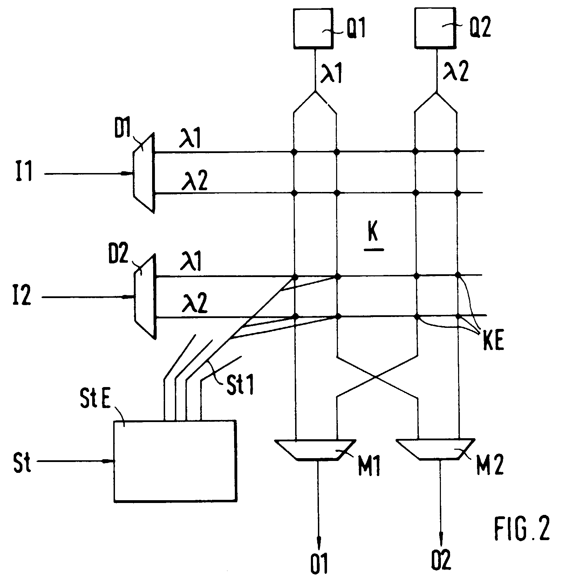

Anhand der Fig. 2 wird ein einfaches Beispiel eines Vermittlungselements beschrieben, in dem Einrichtungen zur Umsetzung der Wellenlängen funktionell mit einer Raumkoppelstufe verbunden sind. Erweiterungen auf mehr Ein- und Ausgänge und auf mehr Wellenlängen sind ohne weiteres möglich.

Das Vermittlungselement nach Fig. 2 weist zwei Eingänge I1 und I2, zwei Ausgänge 01 und 02, zwei Wellenlängen-Demultiplexer D1 und D2, zwei Wellenlängen-Multiplexer M1 und M2, zwei Konstantlicht-Quellen Q1 und Q2 und eine Koppelmatrix K mit Koppelelementen KE (z.B. Modulatoren) auf.

Das Vermittlungselement enthält weiter noch eine Steuereinheit StE mit Steuerleitungen Stl zum Ansteuern der Koppelelemente KE sowie eine äußere Steuerleitung St zum Empfang der dafür erforderlichen Steuersignale. Diese Steuereinheit ist dann Bestandteil der Steuerschaltung 16.

An jedem Ein- und Ausgang können im Wellenlängenmultiplex zwei Signale übertragen werden. Es sind die beiden Betriebs-Wellenlängen Lambda 1 und Lambda 2 vorgesehen. In den den Eingängen I1 und I2 nachgeschalteten Demultiplexern D1 und D2 erfolgt je eine Aufspaltung nach den beiden Wellenlängen. Die insgesamt vier getrennt vorliegenden Signale werden den optischen Zeilenleitungen der Koppelmatrix K zugeführt.

Die beiden Konstantlichtquellen Q1 und Q1 arbeiten mit den beiden Betriebs-Wellenlängen Lambda 1 bzw. Lambda 2. Jede Konstantlichtquelle speist zwei Spaltenleitungen der Koppelmatrix K.

Die Zeilen- und Spaltenleitungen kreuzen sich in den Koppelelementen KE. Jedes Koppelelement KE ist so ausgebildet, daß es in einem nicht aktivierten Zustand das von der zugehörigen Konstantlichtquelle kommende Licht unbeeinflußt hindurchläßt und in einem aktivierten Zustand dieses Licht mit dem Signal der zugehörigen Zeilenleitung moduliert. Die Umschaltung zwischen aktiviertem und nicht aktiviertem Zustand erfolgt durch die genannten Mittel zum Ansteuern der Koppelelemente.

Von jeder Konstantlichtquelle Q1 und Q2 führt eine Spaltenleitung zu jedem Wellenlängen-Multiplexer M1 und M2. Die Wellenlängen-Multiplexer M1 und M2 sind den Ausgängen 01 bzw. 02 vorgeschaltet und fassen jeweils die hierfür bestimmten, auf Licht verschiedener Betriebswellenlängen aufmodulierten Signale zu einem gemeinsamen Wellenlängenmultiplex-Signal zusammen.

Von jedem Eingang I1 und I2 führt somit zu jedem Ausgang 01 und 02 ein Signalweg, der für jedes vom Eingang kommende Teilsignal durch Aktivierung eines Koppelelements KE schaltbar ist oder nicht. Durch Auswahl der Koppelelemente kann der Signalweg mit Umsetzung der Wellenlänge (Lambda 1/Lambda 2, Lambda 2/Lambda 1) oder ohne Umsetzung der Wellenlänge (Lambda 1/Lambda 1, Lambda 2/Lambda 2) geschaltet werden. Damit kann jedes an einem der Eingänge ankommende Teilsignal mit oder ohne Wellenlängenumsetzung zu jedem der Ausgänge hin vermittelt werden, wobei normalerweise darauf zu achten ist, daß zu jedem Ausgang pro Betriebswellenlänge nicht mehr als ein Teilsignal vermittelt werden darf, daß also pro Spaltenleitung gleichzeitig nicht mehr als ein Koppelelement aktiviert sein darf.

Zur Realisierung der einzelnen Funktionen stehen dem Fachmann genügend Möglichkeiten zur Verfügung. Beispielhaft wird hier auf den Artikel "Optical Switching Device Technologies" von M. Sakaguchi und K. Kaede in IEEE Communications Magazine, May 1987 - Vol. 25, No. 5, Seiten 27 bis 32, verwiesen.

Als einfache Demultiplexer können Filter, als einfache Multiplexer können Koppler verwendet werden. Als Koppelelemente werden optisch ansteuerbare und elektrisch aktivierbare Elemente bevorzugt. Derzeit ist aber die elektrische Ansteuerbarkeit optischer Schalter noch einfacher zu realisieren; hierzu müßten die Eingangsteilsignale in elektrische Signale umgewandelt werden.

## Patentansprüche

1. Optische Vermittlungseinrichtung mit einer Mehrzahl optischer Eingangsleitungen und einer Mehrzahl optischer Ausgangsleitungen, mit Einrichtungen (121, ..., 12n) zur Umsetzung der Zeitlagen der Signale einer Leitung, mit Einrichtungen (141, ..., 14m) zur Umsetzung der Wellenlänge der Signale einer Leitung und mit Raumkoppeleinrichtungen (13, 15) zum wahlfreien Austauschen von Signalen auf verschiedenen Leitungen,
**dadurch gekennzeichnet,** daß die
Vermittlungseinrichtung mehrstufig aufgebaut ist, und daß zwischen jeweils zwei der dann als Raumkoppelstufen (13, 15) wirkenden Raumkoppeleinrichtungen Einrichtungen (121, ..., 12n, 141, ..., 14m) zur Umsetzung der Zeitlagen oder Wellenlängen eingefügt sind.

2. Optische Vermittlungseinrichtung nach Anspruch 1, dadurch gekennzeichnet, daß Einrichtungen (121, ..., 12n) zur Umsetzung der Zeitlagen und Einrichtungen (141, ..., 14m) zur Umsetzung der Wellenlängen einander abwechseln und daß dazwischen je eine Raumkoppelstufe (13, 15) enthalten ist.

3. Optische Vermittlungseinrichtung nach Anspruch 1, dadurch gekennzeichnet, daß eine Raumkoppelstufe und Einrichtungen zur Umsetzung der Zeitlagen oder Wellenlängen funktionell eine Einheit bilden.

4. Optische Vermittlungseinrichtung nach Anspruch 1, dadurch gekennzeichnet, daß sie aus untereinander gleich aufgebauten Schaltmodulen (10) besteht, daß jedes Schaltmodul (10) Einrichtungen (121, ..., 12n) zur Umsetzung der Zeitlagen und Einrichtungen (141, ..., 14m) zur Umsetzung der Wellenlängen und mindestens eine Raumkoppelstufe (13, 15) aufweist und daß die Schaltmodule (10) in mindestens zwei aufeinanderfolgenden Stufen angeordnet sind.

5. Optische Vermittlungseinrichtung nach Anspruch 4, dadurch gekennzeichnet, daß jedes Schaltmodul (10) zwei Raumkoppelstufen (13, 15) enthält, daß eine der Raumkoppelstufen (13) zwischen den Einrichtungen (121, ..., 12n) zur Umsetzung der Zeitlagen und den Einrichtungen (141, ..., 14m) zur Umsetzung der Wellenlängen angeordnet ist und daß zwischen den beiden Raumkoppelstufen (13, 15) entweder die Einrichtungen zur Umsetzung der Zeitlagen oder die Einrichtungen (141, ..., 14m) zur Umsetzung der Wellenlängen angeordnet sind.

6. Schaltmodul für eine optische Vermittlungseinrichtung,
**dadurch gekennzeichnet,** daß es Einrichtungen (121, ..., 12n) zur Umsetzung der Zeitlagen und Einrichtungen (141, ..., 14m) zur Umsetzung der Wellenlängen und zwei Raumkoppelstufen (13, 15) enthält, daß eine der Raumkoppelstufen (13) zwischen den Einrichtungen (121, ..., 12n) zur Umsetzung der Zeitlagen und den Einrichtungen (141, ..., 14m) zur Umsetzung der Wellenlängen angeordnet ist und daß zwischen den beiden Raumkoppelstufen (13, 15) entweder die Einrichtungen zur Umsetzung der Zeitlagen oder die Einrichtungen (141, ..., 14m) zur Umsetzung der Wellenlängen angeordnet sind.

## Claims

1. Optical switch comprising a plurality of optical input lines, a plurality of optical output lines, devices (121, ..., 12n) for interchanging the time slots of the signals of a line, devices (141, ..., 14m) for converting the wavelengths of the signals of a line, and space-division switching networks (13, 15) for freely exchanging signals on different lines,
**characterized in** that the switch is a multistage switch, and that between every two of the space-division switching networks, which then act as space switching stages (13, 15), time-slot-interchanging or wavelength-converting devices (121, 12n, 141, ..., 14m) are inserted.

2. An optical switch as claimed in claim 1,
characterized in that time-slot-interchanging devices (121, ..., 12n) alternate with wavelength-converting devices (141, ..., 14m), and that a space switching stage (13, 15) is provided therebetween.

3. An optical switch as claimed in claim 1,
characterized in that a space switching stage and time-slot-interchanging or wavelength-converting devices form a functional unit.

4. An optical switch as claimed in claim 1, characterized in that it consists of switching modules (10) of identical construction, that each switching module (10) includes time-slot-interchanging devices (121, ..., 12n) and wavelength-converting devices (141, ..., 14m) and at least one space switching stage (13, 15), and that the switching modules (10) are arranged in at least two successive stages.

5. An optical switch as claimed in claim 4, characterized in that each switching module (10) includes two space switching stages (13, 15), that one of the space switching stages (13) is inserted between the time-slot-interchanging devices (121, ..., 12n) and the wavelength-converting devices (141, ..., 14m), and that between the two space switching stages (13, 15), either the time-slot-interchanging devices or the wavelength converting devices (141, ..., 14m) are inserted.

6. Switching module for an optical switch,
**characterized in** that it includes time-slot-interchanging devices (121, ..., 12n), wavelength-converting devices (141, ..., 14m), and two space switching stages (13, 15), that one of the space switching stages (13) is inserted between the time-slot-interchanging devices (121, ..., 12n) and the wavelength-converting devices (141, ..., 14m), and that between the two space switching stages (13, 15), either the time-slot-interchanging devices or the wavelength converting devices (141, ..., 14m) are inserted.

## Revendications

1. Autocommutateur optique avec un grand nombre de lignes d'entrée optiques et un grand nombre de lignes de sortie optiques, avec des équipements (121, ..., 12n) pour la conversion des positions temporelles des signaux d'une ligne, avec des équipements (141, ..., 14m) pour la conversion des longueurs d'ondes des signaux d'une ligne et avec des équipements de couplage spatial (13, 15) pour l'échange, sans numérotation, de signaux sur différentes lignes, caractérisé par le fait que l'autocommutateur a une construction à plusieurs niveaux, et que entre deux des équipements de couplage spatial fonctionnant alors comme niveaux spatiaux (13, 15), des équipements (121, ..., 12n, 141, ..., 14m) sont utilisés pour la conversion des positions temporelles ou des longueurs d'ondes.

2. Autocommutateur optique conformément à la revendication 1, caractérisé par le fait que des équipements (121, ..., 12n) pour la conversion des positions temporelles et des équipements (141, ..., 14m) pour la conversion des longueurs d'ondes se suivent, avec chaque fois un niveau de couplage spatial (13, 15) entre eux.

3. Autocommutateur optique conformément à la revendication 1, caractérisé par le fait qu'un niveau de couplage spatial et des équipements de conversion des positions temporelles ou longueurs d'ondes forment une unité fonctionnelle.

4. Autocommutateur optique conformément à la revendication 1, caractérisé par le fait qu'elle se compose de modules de commutation (10) de construction équivalente, que chaque module de commutation (10) comporte des équipements (121, ..., 12n) pour la conversion des positions temporelles et des équipements (141, ..., 14m) pour la conversion des longueurs d'ondes, et au moins un niveau de couplage spatial (13, 15), et par le fait que les modules de commutation (10) sont agencés en au moins deux niveaux successifs.

5. Autocommutateur optique conformément à la revendication 4, caractérisé par le fait que chaque module de comuutation (10) comprend deux niveaux de couplage spatial (13, 15), qu'un des niveaux de couplage spatial (13) se trouve entre les équipements (121, ..., 12n) pour la conversion des positions temporelles et les équipements (141, ..., 14m) pour la conversion des longueurs d'ondes, et que, entre les deux niveaux de couplage spatial (13, 15), se trouvent soit les équipements (121, ..., 12n) pour la conversion des positions temporelles soit les équipements (141, ..., 14m) pour la conversion des longueurs d'ondes.

6. Module de commutation pour un autocommutateur optique, caractérisé par le fait qu'il comprend des équipements (121, ..., 12n) pour la conversion des positions temporelles et des équipements (141, ..., 14m) pour la conversion des longueurs d'ondes ainsi que deux niveaux de couplage spatial (13, 15), qu'un des niveaux de couplage spatial (13) se trouve entre les équipements (121, ..., 12n) pour la conversion des positions temporelles et les équipements (141, ..., 14m) pour la conversion des longueurs d'ondes, et que, entre les deux niveaux de couplage spatial (13, 15), se trouvent soit les équipements (121, ..., 12n) pour la conversion des positions temporelles soit les équipements (141, ..., 14m) pour la conversion des longueurs d'ondes.
